# EUROPÄISCHE PATENTSCHRIFT

(11) **EP 1 071 960 B1**
(45) Veröffentlichungstag und Bekanntmachung des Hinweises auf die Patenterteilung: **10.04.2013**
(21) Anmeldenummer: 00907571.4
(22) Anmeldetag: 16.02.2000
(51) Int. Cl.: G01N 35/10, B01L 3/02

(54) **DOSIERVORRICHTUNG SOWIE VERFAHREN ZUM BETREIBEN EINER DOSIERVORRICHTUNG**
METERING DEVICE AND METHOD FOR OPERATING A METERING DEVICE
DISPOSITIF DE DOSAGE ET PROCEDE PERMETTANT DE FAIRE FONCTIONNER UN DISPOSITIF DE DOSAGE

(30) Priorität: 16.02.1999 DE 19906409
(43) Veröffentlichungstag der Anmeldung: 31.01.2001
(73) Patentinhaber: BRAND GMBH + CO KG, 97877 Wertheim (DE)
(72) Erfinder: LANG, Andreas, D-97828 Marktheidenfeld (DE); KUNZE, Hubert, D-97892 Kreuzwertheim (DE); ALBRECHT, Eberhard, D-97877 Wertheim (DE); MAHLER, Peter, D-97892 Kreuzwertheim (DE)
(74) Vertreter: Von Rohr
(86) Internationale Anmeldenummer: PCT/EP2000/001260
(87) Internationale Veröffentlichungsnummer: WO 2000/049418

(56) Entgegenhaltungen:
- EP-A- 0 226 867
- EP-A- 0 250 243
- EP-A- 0 253 685
- DE-B- 2 407 101
- DE-U- 9 003 629
- US-A- 5 173 741

## Beschreibung

Die Erfindung betrifft eine Dosiervorrichtung nach dem Oberbegriff des Anspruches 1 sowie ein Verfahren zum Betreiben einer Dosiervorrichtung nach dem Oberbegriff des Anspruches 12.

Eine im praktischen Betrieb eingesetzte Dosiervorrichtung weist einen Entnahmebehälter und eine Dosiereinrichtung auf, die mit dem Entnahmebehälter in Leitungsverbindung steht und das zu dosierende Medium an Aufnahmebehältnisse abgibt. Bei einer derartigen Dosieranlage kann es sich beispielsweise um eine Mehrkanalausführung mit Hubkolbensystem handeln, deren technischer Aufbau aufwendig ist, die aus hochwertigen Materialien bestehen und die damit insgesamt eine teure Konstruktion darstellt. Weitere Probleme stellt ein üblicherweise hoher Verschleiß dar. Ferner muß bei einem Medienwechsel eine aufwendige Säuberung vorgenommen werden, wobei im Rahmen der Erfindung durchgeführte Untersuchungen ergeben haben, daß es vor allem bei kritischen Medien schwer ist, aufgrund der Hubkolbensysteme, die häufig kompliziert geformte Hinterschneidungen aufweisen, diese ausreichend zu säubern und, falls nötig, zu sterilisieren.

Die bekannte Dosiervorrichtung, von der die Erfindung ausgeht (DE-U-90 03 629), weist trotz eines modularen Aufbaus im Grund die zuvor erläuterten Nachteile auf, weil die Dosiereinrichtung zwar mehrere Moduln hat, jeder Modul aber aus einer Kolben-Zylinder-Einheit in Verbindung mit einer Ventileinrichtung mit Ventilen in einem Ventilgehäuse besteht. So ist zwar eine Auswechselbarkeit gegeben, der Aufwand für Säuberung und nötigenfalls Sterilisierung ist jedoch der gleiche wie im zuvor angesprochenen Stand der Technik. In entsprechender Weise gilt das auch für eine Dosiervorrichtung, bei der auch der Entnahmebehälter noch Teil der Dosiereinrichtung ist (US-A-5,173,741).

Der Erfindung liegt das Problem zugrunde, eine Dosiervorrichtung der in Rede stehenden Art zu schaffen, die hinsichtlich der Säuberung einfacher zu betreiben ist.

Die Lösung dieses Problems erfolgt durch die Merkmale des Anspruches 1, Dadurch wird erreicht, dass die Kolben-Zylinder-Einheiten im Bedarfsfall auf einfache Art und Weise ausgewechselt und entsorgt werden können, so dass der gesamte Aufwand für eine Säuberung der Dosiereinrichtung eingespart werden kann. Dies ist vor allem bei Dosiervorrichtungen vorteilhaft, bei denen häufig ein Medienwechsel durchgeführt werden muß oder die mit Medien betrieben werden, die zu einer starken Verschmutzung führen, was deren Funktionsfähigkeit beeinträchtigt, so daß bei bekannten Anlagen ein hoher Aufwand für eine häufige Reinigung erfolgt, während bei der erfindungsgemäßen Dosiervorrichtung lediglich ein Austausch der Wegwerfteile erforderlich ist. Das ist möglich, weil die Kolben-Zylinder-Einheit ein Kunststoffteil ist, dessen Materialwert niedrig ist und das auf umweltfreundliche Art und Weise recyclebar ist.

Die Unteransprüche haben vorteilhafte Weiterbildungen der Erfindung zum Inhalt.

Zum Betrieb der Dosiereinrichtung ist bei einer besonders bevorzugten Ausführungsform eine Motor-Antriebseinrichtung vorgesehen, die über einen geeigneten Bewegungsumformer bzw. ein Getriebe eine Koppeleinrichtung längsverfahrbar antreibt. Die Koppeleinrichtung wiederum ist an dem Kolben der Kolben-Zylinder-Einheit befestigbar, so dass zum Einbau des Wegwerfteiles dieses lediglich in die Dosiereinrichtung eingesetzt und mit ihrem Kolben an der Antriebseinrichtung über die Koppeleinrichtung angeschlossen werden muß.

Die Dosiereinheit wiederum ist mit einer Ventileinrichtung verbunden, die im Strömungsweg zwischen dem Entnahmebehälter und den Aufnahmebehältnissen angeordnet ist. Die Ventileinrichtung weist bei einer besonders bevorzugten Ausführungsform ein Ansaugventil und ein Ausströmventil auf, welche jeweils vorzugsweise als Rückschlagventile ausgebildet sind, die in einem Ventilgehäuse bzw. Ventilkopf zur Bildung eines separat handelbaren und kompakten einheitlichen Bauteils angeordnet sind. Wird der Kolben der Kolben-Zylinder-Einheit beim Betrieb der Dosiervorrichtung hochgezogen, entsteht ein Unterdruck im Ventilkopf, bei dem sich das Ansaugventil öffnet und zu dosierendes Medium dementsprechend angesaugt werden kann. Bei Überdruck, also beim Herabdrücken des Kolbens der Kolben-Zylinder-Einheit, öffnet das Ausstoßventil und der Dosiervorgang kann durchgeführt werden.

Neben den Zylinder-Kolben-Einheiten kann auch die Ventileinrichtung, insbesondere der Ventilkopf und die sonstigen Teile der Ventileinrichtung als Wegwerfteil, insbesondere aus Kunststoff, ausgebildet sein. Dies ergibt insgesamt eine weitere Verbesserung der einfachen Bedienbarkeit, da die Kolben-Zylinder-Einheiten und die Ventileinrichtungen mit einfachen Handgriffen schnell, sicher, dicht und lösbar und ohne das Erfordernis von Werkzeugen montiert und demontiert werden können.

Um diese einfache Handhabbarkeit noch zu verbessert, ist der Zylinder der Kolben-Zylinder-Einheit bei einer besonders bevorzugten Ausführungsform mit einer Gewindeverbindung (insbesondere einer Luer-Lock-Verbindung) und einem Dichtkonus versehen, der mit einem Gegenkonus im Ventilkopf zusammenwirkt. Hierdurch kann bei entsprechender Ausbildung der Gewindeverbindung der Zylinder mit einer halben Umdrehung sowohl am Ventilkopf fixiert als auch über die beiden zusammen wirkenden Dichtkonen dicht mit dem Ventilkopf verbunden werden.

Der Ventilkopf selber kann ebenfalls dicht auf einem einfachen Anschlußzapfen durch einfaches Aufstecken angebracht werden. Es ergibt sich somit insbesondere dann ein besonderer Vorteil bei der erfindungsgemäßen Dosiervorrichtung, wenn die Kolben-Zylinder-Einheiten und die Ventileinrichtungen als sterilisierte Teile verwendet werden müssen. Diese können gemäß den Prinzipien in der Erfindung bei der Herstellung sterilisiert werden und somit als vorsterilisierte Teile angeliefert, eingebaut und nach Gebrauch ausgebaut und entsorgt werden, um sie durch neue vorsterilisierte Teile zu ersetzen. Dies ergibt insofern besondere Vorteile, als eine aufwendige Reinigung, die einen vorherigen Ausbau dieser Teile erforderlich machen würde, und eine darauffolgende Sterilisierung und ein Wiedereinbau dieser alten Teile, entfallen kann.

Bei einer weiteren besonders bevorzugten Ausführungsform ist die Ventileinrichtung auf einer Verteilerschiene angeordnet, die über eine Verbindungsleitung mit dem Entnahmebehälter in Strömungsverbindung steht. Die Verbindungsleitung ist vorzugsweise als ein in der Verteilerschiene integrierter Kanal ausgebildet, der bei einer weiteren besonders bevorzugten Ausführungsform mit einem Unterteil eines Ausgleichsbehälters über eine Verbindungsbohrung in Strömungsverbindung steht. Die Ventileinrichtung ist über geeignete Anschlußteile, wie beispielsweise Anschlußnoppen, mit der Verteilerschiene in Strömungsverbindung geschaltet.

Der Ausgleichsbehälter, der zwischen dem Entnahmebehälter und der Dosiereinheit angeordnet ist, dient zur Aufrechterhaltung eines weitgehend konstanten Ansaugdruckes, wozu bei einer weiteren besonders bevorzugten Einrichtung Sensoren am Ausgleichsbehälter zur Bestimmung des Füllvolumens vorgesehen sind. Diese Sensoren können eine im Förderweg befindliche Pumpe zur Grundförderung des Mediums in den Ausgleichsbehälter steuern, so daß dieser ein weitgehend konstantes Füllvolumen hat, was wiederum einen weitgehend konstanten Eingangsdruck in der Ventileinrichtung sicherstellt.

Das Vorsehen des Ausgleichsbehälters ist vor allem beim Vorsehen von aus Kunststoff bestehenden Dosiereinheiten besonders vorteilhaft, da dadurch deren Elastizität und inhärente Förderungenauigkeit ausgeglichen werden kann. Denn bei derartigen Dosiereinheiten darf nur ein relativ geringer Ansaugdruck herrschen, da die Kolben-Zylinder-Einheiten ansonsten undicht und damit in ihrer Förderrate ungenau werden würde.

Als ein weiteres besonders bevorzugtes Merkmal kann der Ausgleichsbehälter ferner mit einem Sterilfilter versehen werden, wenn ein Arbeiten unter sterilen Bedingungen erforderlich sein sollte.

Schließlich ist es möglich, die Dosiereinrichtung verfahrbar in der Dosiervorrichtung zu lagern, wozu beispielsweise die gesamte Dosiereinrichtung entlang einer Schiene verfahrbar gelagert werden kann.

In Anspruch 12 ist ein Verfahren zum Betrieb einer Dosiervorrichtung angegeben. Bei der vorteilhaften Weiterbildung des Verfahrens gemäß Anspruch 12 wird ein definierter Tropfenrückzug in die Ausstoßkanüle der Dosiereinrichtung bzw. Dosiereinheit erreicht.

Hierzu wird nach der Dosierung der Kolben der Kolben-Zylinder-Einheit ein kleines definiertes Stück zurückgezogen, was die in der Dosiereinheit befindliche Flüssigkeitssäule entlastet und somit den Tropfen zurückzieht. Dies wird durch den aufgrund seines Materials elastischen Ventilkörper erreicht, der sich beim Zurückziehen des Kolbens der Kolben-Zylinder-Einheit verformt und somit einen Rückzug der Flüssigkeitssäule ermöglicht. Der besondere Vorteil hierbei ist vor allem darin zu sehen, daß bei einer verfahrbaren Dosiereinheit keine Tropfenspritzer entstehen, die die gesamte Vorrichtung bzw. Anlage verschmutzen würden.

Es ist selbstverständlich, daß die erfindungsgemäße Dosiervorrichtung auf vielerlei Art und Weise an unterschiedliche Anwendungsfälle angepaßt werden kann. Insbesondere ist es möglich, daß mehrere Entnahmebehälter und vor allem mehrere Dosiereinheiten vorgesehen sind, die alle in der Dosiereinrichtung angeordnet und mit als Wegwerfteilen ausgebildeten Kolben-Zylinder-Einheiten versehen sind. Derartige Anpassungen liegen alle im Rahmen der Prinzipien vorliegender Erfindung.

Weitere Einzelheiten, Merkmale und Vorteile der Erfindung ergeben sich aus nachfolgender Beschreibung eines Ausführungsbeispiels anhand der Zeichnung. Es zeigt:
Fig. 1 eine schematisch leicht vereinfachte teilweise Darstellung einer erfindungsgemäßen Dosiereinrichtung in perspektivischer Ansicht, und
Fig. 2 eine der Fig. entsprechende vergrößerte Darstellung eines Teils der Dosiervorrichtung gemäß Fig. 1.

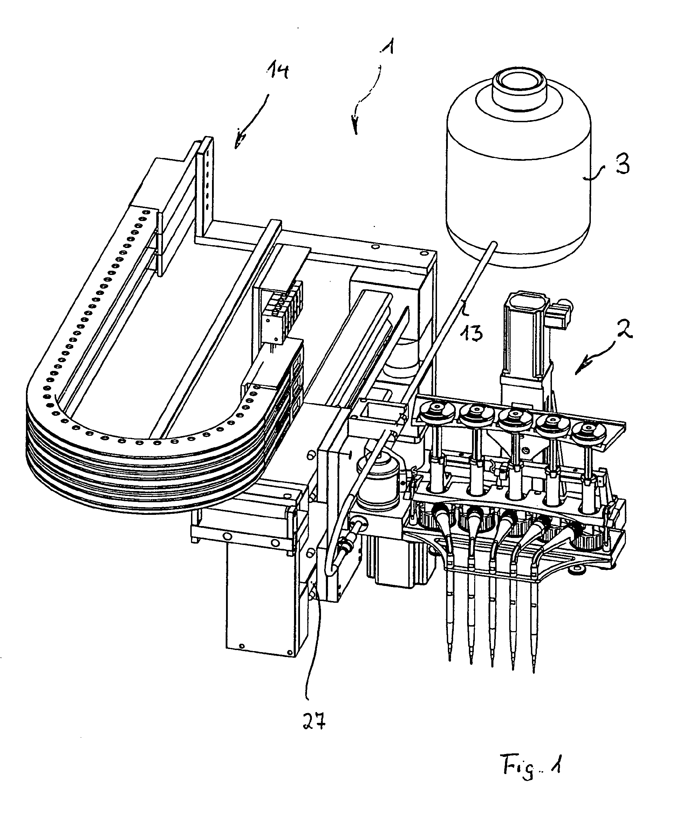

Fig. 1 der Zeichnung zeigt eine schematisch leicht vereinfachte perspektivische Teildarstellung einer erfindungsgemäßen Dosiervorrichtung 1, die einen schematisch dargestellten Entnahmebehälter 3 und eine in ihrer Gesamtheit mit der Bezugsziffer 2 gekennzeichnete Dosiereinrichtung aufweist. Die Dosiereinrichtung 2 ist über eine Leitungsverbindung ständig mit dem Entnahmebehälter 3 verbunden.

Die erfindungsgemäße Dosiervorrichtung 1 weist ferner einen in seiner Gesamtheit mit der Bezugsziffer 14 gekennzeichneten Anlagenteil auf, der sämtliche für den Betrieb der Vorrichtung erforderlichen elektrischen Einrichtungen, elektrischen Leitungen, Maschinenrahmen und ähnliches symbolisiert.

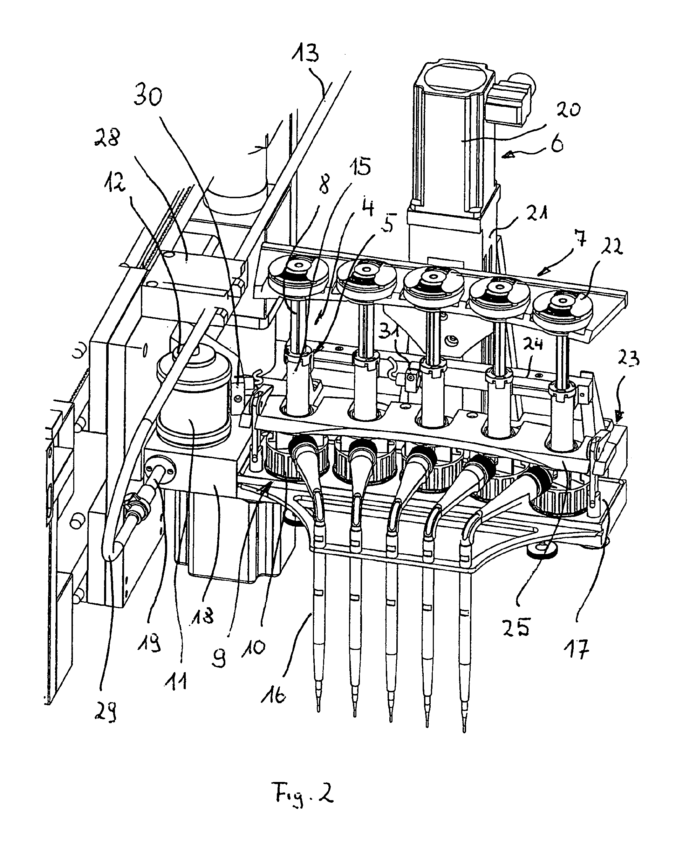

Die Dosiereinrichtung 2 weist im Beispielsfalle der Fig. 1 und 2 fünf Dosiereinheiten auf, von denen eine repräsentativ mit der Bezugsziffer 4 gekennzeichnet ist. Jede Dosiereinheit 4 weist wiederum eine als Wegwerfteil und vorzugsweise aus Kunststoffmaterial bestehende Kolben-Zylinder-Einheit 5 auf, die einen längs verfahrbaren Kolben 8 umfaßt, der in einem Zylinder 15 angeordnet ist. Die Kolben-Zylinder-Einheit 5 ist auf einer Ventileinrichtung 9 angeordnet, die ein Ventilgehäuse 10 aufweist, in dem ein Ansaugventil und ein Ausstoßventil angeordnet sind, die jedoch in der Zeichnung nicht näher dargestellt sind. Das Ausstoßventil und das Ansaugventil können jedoch in an sich bekannter Art und Weise ausgebildet sein und einen zwischen einer Offen- und einer Schließstellung bewegbaren Ventilkörper, einen entsprechend ausgebildeten Ventilsitz und eine Dichtung aufweisen.

Die Zeichnung verdeutlicht, daß die Kolben-Zylinder-Einheit 5 mit ihrem Zylinder 15 auf das Ventilgehäuse 10 aufgesetzt ist. Am Ventilgehäuse 10 ist ferner eine Ausstoßkanüle 16 angeordnet, aus der das zu dosierende Medium in Aufnahmebehältnisse abgegeben wird, die in der Zeichnung ebenfalls nicht näher dargestellt sind.

Das Ventilgehäuse 10 ist bei der dargestellten Ausführungsform auf eine Verteilerschiene 17 aufgesetzt. In der Verteilerschiene 17 ist eine Leitung integriert, die über eine entsprechende Verbindungsvorrichtung, wie beispielsweise Anschlußnoppen, mit dem Ventilgehäuse 10 in Strömungsverbindung steht. Natürlich sind auch alle anderen Ventileinrichtungen auf diese Art und Weise mit der Verbindungsleitung der Verteilerschiene 17 verbunden.

Die in der Verteilerschiene 17 verlaufende Verbindungsleitung ist wiederum mit einem Unterteil 18 eines Ausgleichsbehälters 11 strömungsverbunden. Das Unterteil 18 weist einen Anschluß 19 auf, der mit einem Leitungsabschnitt 29 verbunden werden kann, der mit der Verbindungsleitung 13 in Strömungsverbindung steht, so daß eine durchgehende Strömungsverbindung zwischen dem Entnahmebehälter 3 und den Ventileinrichtungen 9 bzw. Dosiereinheiten 4 geschaffen wird. Der Ausgleichsbehälter 11 ist bei der dargestellten Ausführungsform mit einem Sterilfilter 12 und einer Sensoranordnung 30 versehen, die das Füllvolumen des Ausgleichsbehälters 11 auf einen annähernd konstanten Wert steuert.

Die erfindungsgemäße Dosiervorrichtung 1 weist ferner eine Antriebseinrichtung 6 auf, die im Beispielsfalle als Motor-Antriebseinrichtung ausgebildet ist und einen Motor 20 und einen mit dem Motor 20 verbundenen Bewegungsumformer 21 aufweist. Der Bewegungsumformer 21 wandelt die Drehbewegung der Motorwelle in eine Längsbewegung um, die auf eine Koppeleinrichtung 7 übertragen wird, die in Antriebsverbindung mit der Antriebseinrichtung 6 steht. Die Koppeleinrichtung 7 wiederum weist pro Kolben-Zylinder-Einheit 5 eine vorzugsweise als Schnellspanner ausgebildete Anschlußeinrichtung 22 auf, die mit dem Bund am freien Ende des Kolbens 8 der Kolben-Zylinder-Einheit 5 lösbar verbunden werden kann.

Die Kolben-Zylinder-Einheiten 5 und die Ventileinrichtungen 9 wiederum sind in einer Haltevorrichtung 23 eingesetzt, die eine Halteplatte 25 umfaßt, die über den Ventilgehäusen 10 angeordnet ist. Somit sind die Zylinder der Kolben-Zylinder-Einheiten 5 und die Ventilgehäuse 10 fixiert, so daß bei einem Verfahren der Koppeleinrichtung 7 nur die Kolben 8 in den Zylindern 15 auf und ab bewegt werden, um den Ansaughub und den Ausstoßhub zu bewerkstelligen.

Ferner zeigt Fig. 2 einen Haltebügel 24 für Füllstandssensoren pro Kolben-Zylinder-Einheit 5, von denen in Fig. 2 zur Vereinfachung der Darstellung nur ein Sensor 31 am Haltebügel 24 eingezeichnet ist. Die Sensoren 31 überprüfen für jede Kolben-Zylinder-Einheit den Füllstand. Falls eine Fehlbefüllung, beispielsweise durch Luftblasenbildung, erfaßt wird, wird über die Sensoren 31 ein Störsignal erzeugt, so daß die erfindungsgemäße Dosiervorrichtung entweder über eine Steuerung gestoppt werden kann, oder eine automatische Entlüftung der Kolben-Zylinder-Einheiten 5 erfolgt. Es kann hierbei zur Entlüftung ein schnelles Auf- und Abbewegen zur Erzeugung schneller Hubbewegungen der Kolben 8 initiiert werden, was die Luft aus den Zylindern 15 austreibt.

Um es zu ermöglichen, daß in einem derartigen Falle die Luft aus allen Zylindern 15 entfernt werden kann, muß sichergestellt werden, daß die jeweiligen Kolben 8 "auf Block gefahren werden". Dies bedeutet, daß die Kolben 8 bis zum Boden des jeweiligen Zylinders 15 heruntergefahren werden müssen. Bei der in Fig. 2 dargestellten besonders bevorzugten Ausführungsform weisen die Schnellspanner 22 ein Ausgleichselement, beispielsweise eine Feder in ihrem Gehäuse auf, die in der Figur jedoch nicht sichtbar ist. Dieses Ausgleichselement stellt sicher, daß alle Kolben nötigenfalls auf Block gefahren werden können, ohne daß eine Beschädigung am Zylinder, am Kolben oder der gesamten Anlage auftritt, da aufgrund von Toleranzen in den einzelnen Bauteilen und Montagetoleranzen nicht von vornherein als garantiert angesehen werden kann, daß beim Herunterfahren alle Kolben in jedem Zylinder eine mit den andere Kolben ausgerichtete Endstellung haben. Das Ausgleichselement schafft somit die Möglichkeit, daß alle Kolben in ihre unterste Endstellung zum Entlüften heruntergefahren werden können, ohne daß hierdurch Beschädigungen auftreten.

Die gesamte Anordnung, die die Dosiereinrichtung 2 und die Motor-Antriebseinrichtung 6 mit den zuvor erläuterten Komponenten aufweist, ist entlang einer Achse 27 verfahrbar am Rahmen der Dosiereinrichtung 1 gelagert. Auf dieser insgesamt verfahrbar gelagerten Anordnung ist ferner eine Schlauchklemme 28 vorgesehen, in die die. Verbindungsleitung 13, die üblicherweise als flexibles Schlauchelement ausgebildet ist, eingelegt ist. Von der Schlauchklemme 28 führt das Schlauchverbindungsstück 29 zum Anschlußstutzen 19.

Beim Betrieb der Dosiervorrichtung 1 wird zunächst je nach Anwendungsfall eine entsprechende Anzahl von Dosiereinheiten 4, die alle als Wegwerfteile ausgebildet sind, in die Vorrichtung in der zuvor beschriebenen Art und Weise eingesetzt, so daß die Kolben-Zylinder-Einheit 5 auf den Ventilgehäusen 10 angeordnet sind und die Kolben 8 mit der Koppeleinrichtung 7 verbunden sind. Während des Betriebes wird die Koppeleinrichtung 7 mit Hilfe der Antriebseinrichtung 6 auf und ab bewegt, was die Kolben 8 in den Zylindern 15 hin und her bewegt, so daß der Ansaughub und der Ausstoßhub durchgeführt werden können. Die Entnahme von Medium aus dem Entnahmebehälter 8 erfolgt hierbei über die sich öffnenden und schließenden Ansaugventile und Ausstoßventile der Ventileinrichtung 9. Die Sensoranordnung 30 am Ausgleichsbehälter 11 stellt hierbei sicher, daß ein weitgehend konstantes Füllvolumen im Ausgleichsbehälter 11 vorliegt, was zu einem konstanten Ansaugdruck in der Verbindungsleitung und damit zu einem konstanten Ansaugdruck für die Kolben-Zylinder-Einheiten 5 führt, der vorzugsweise auf einen geringen Wert eingestellt wird, damit die üblicherweise aus Kunststoff bestehenden Kolben-Zylinder-Einheiten 5 dicht sind und somit eine hohe Fördergenauigkeit haben.

## Patentansprüche

1. Dosiervorrichtung mit mindestens einem Entnahmebehälter (3) und einer Dosiereinrichtung (2), die mit dem Entnahmebehälter (3) in Leitungsverbindung steht und über die das zu dosierende Medium an Aufnahmebehältnisse abgebbar ist,
wobei die Dosiereinrichtung (2) mehrere jeweils einen Kolben (8) und einen Zylinder (15) aufweisende Kolben-Zylinder-Einheiten (5) aufweist, die jeweils mit einer Ventileinrichtung (9) in Strömungsverbindung stehen,
**dadurch gekennzeichnet,**
**dass** die Kolben-Zylinder-Einheiten (5) als Wegwerfteile aus Kunststoff ausgebildet und in die Dosiereinrichtung (2) auswechselbar eingesetzt sind,
**dass** jede Ventileinrichtung (9) ein Ventilgehäuse (10) aufweist und dass die Kolben-Zylinder-Einheiten (5) auf den Ventilgehäusen (10) dicht und ohne das Erfordernis von Werkzeugen montierbar und demontierbar angeordnet sind.

2. Dosiervorrichtung nach Anspruch 1, **dadurch gekennzeichnet,**
**dass** der jeweilige Zylinder (15) der Kolben-Zylinder-Einheit (5) auf das entsprechende Ventilgehäuse (10) aufgesetzt ist.

3. Dosiervorrichtung nach Anspruch 1 oder 2, **dadurch gekennzeichnet,**
**dass** die Dosiereinrichtung (2) eine Motor-Antriebseinrichtung (6) aufweist, die mit einer längsverfahrbaren Koppeleinrichtung (7) verbunden ist, die am Kolben (8) der Kolben-Zylinder-Einheit (5) befestigbar ist.

4. Dosiervorrichtung nach Anspruch 3, **dadurch gekennzeichnet,**
**dass** die Koppeleinrichtung (7) je Kolben (8) der Kolben-Zylinder-Einheit (5) einen Schnellspanner (22) aufweist, der vorzugsweise mit einem Ausgleichselement versehen ist.

5. Dosiervorrichtung nach einem der Ansprüche 1 bis 4, **dadurch gekennzeichnet,**
**dass** die Ventileinrichtungen (9) als Wegwerfteile ausgebildet sind, die vorzugsweise aus Kunststoffmaterial bestehen.

6. Dosiervorrichtung nach einem der Ansprüche 1 bis 5, **dadurch gekennzeichnet,**
**dass** jede Ventileinrichtung (9) in dem Ventilgehäuse (10) ein Ansaugventil und ein Ausstoßventil aufweist.

7. Dosiervorrichtung nach einem der Ansprüche 1 bis 6, **dadurch gekennzeichnet,**
**dass** die Ventileinrichtungen (9) auf einer Verteilerschiene (17) angeordnet sind, die über eine Verbindungsleitung mit dem Entnahmebehälter (3) in Verbindung steht.

8. Dosiervorrichtung nach einem der Ansprüche 1 bis 7, **dadurch gekennzeichnet,**
**dass** zwischen dem Entnahmebehälter (3) und der Kolben-Zylinder-Einheit (5) ein Ausgleichsbehälter (11) zur Aufrechterhaltung eines weitgehend konstanten Ansaugunterdruckes in der Verbindungsleitung angeordnet ist.

9. Dosiervorrichtung nach Anspruch 8, **dadurch gekennzeichnet,**
**dass** der Ausgleichsbehälter (11) mit einem Sterilfilter (12) versehen ist.

10. Dosiervorrichtung nach Anspruch 8 oder 9, **dadurch gekennzeichnet,**
**dass** der Ausgleichsbehälter (11) mit einer Sensoranordnung zur Steuerung einer Pumpe in der Verbindungsleitung zum Entnahmebehälter (3) versehen ist, derart, dass das Füllvolumen des Ausgleichsbehälters (11) annähernd konstant ist.

11. Dosiervorrichtung nach einem der Ansprüche 1 bis 10, **dadurch gekennzeichnet,**
**dass** die Dosiereinrichtung (2) verfahrbar gelagert ist.

12. Verfahren zum Betreiben einer Dosiervorrichtung (1) mit mindestens einem Entnahmebehälter (3) und mit einer Dosiereinrichtung (2), die mit dem Entnahmebehälter (3) in Leitungsverbindung steht und das zu dosierende Medium an Aufnahmebehältnisse abgibt,
**dadurch gekennzeichnet,**
**dass** in die Dosiereinrichtung (2) mehrere als Wegwerfteile ausgebildete Kolben-Zylinder-Einheiten (5) eingesetzt werden, mit einer Antriebseinrichtung (6) verbunden werden und nach einem an den Anwendungsfall anpassbaren Dosierzyklus gegen neue Wegwerfteile ausgetauscht werden und
**dass** die Kolben-Zylinder-Einheiten (5) auf Ventilgehäuse (10) von als Wegwerfteile ausgebildeten Ventileinrichtungen (9) ausgesetzt werden, die nach dem Dosierzyklus gegen neue als Wegwerfteile ausgebildete Ventileinrichtungen (9) ausgetauscht werden.

13. Verfahren nach Anspruch 12, **dadurch gekennzeichnet, dass** zum Tropfenrückzug in eine Ausstoßkanüle (16) der Kolben-Zylinder-Einheit (5) deren Kolben (8) nach der Dosierung ein definiertes Stück zur Druckentlastung der Flüssigkeitssäule zurückgezogen wird, so dass der an der Spitze der Ausstoßkanüle (16) befindliche Tropfen zurückgezogen wird.

## Claims

1. Metering apparatus with at least one reservoir (3) and a metering device (2) which is connected by line to the reservoir (3) and via which the medium which is to be metered can be dispensed to receiving containers, wherein the metering device (2) has a plurality of piston-cylinder units (5) which each have a piston (8) and a cylinder (15) and are each fluidically connected to a valve device (9),
**characterized in that**
the piston-cylinder units (5) are in the form of plastics disposable parts and are inserted exchangeably into the metering device (2) and **in that** each valve device (9) has a valve housing (10), and **in that** the piston-cylinder units (5) are arranged tightly on the valve housings (10) and so as to be able to be fitted and removed without tools being required.

2. Metering apparatus according to Claim 1, **characterized in that** the cylinder (15) of each piston-cylinder unit (5) is placed onto the corresponding valve housing (10).

3. Metering apparatus according to Claim 1 or 2, **characterized in that** the metering device (2) has a motor driving device (6) which is connected to a longitudinally moveable coupling device (7) which is fastenable to the piston (8) of the piston-cylinder unit (5).

4. Metering apparatus according to Claim 3, **characterized in that** the coupling device (7) has a quick-acting clamping device (22) for each piston (8) of the piston-cylinder unit (5), said quick-acting clamping device preferably being provided with an equalizing element.

5. Metering apparatus according to one of Claims 1 to 4, **characterized in that** the valve devices (9) are in the form of disposable parts which are preferably composed of plastics material.

6. Metering apparatus according to one of Claims 1 to 5, **characterized in that** each valve device (9) in the valve housing (10) has an intake valve and an ejection valve.

7. Metering apparatus according to one of Claims 1 to 6, **characterized in that** the valve devices (9) are arranged on a distributor rail (17) which is connected via a connecting line to the reservoir (3).

8. Metering apparatus according to one of Claims 1 to 7, **characterized in that** an equalizing container (11) for maintaining a substantially constant intake vacuum in the connecting line is arranged between the reservoir (3) and the piston-cylinder unit (5).

9. Metering apparatus according to Claim 8, **characterized in that** the equalizing container (11) is provided with a sterile filter (12).

10. Metering apparatus according to Claim 8 or 9, **characterized in that** the equalizing container (11) is provided with a sensor arrangement for controlling a pump in the connecting line to the reservoir (3) in such a manner that the filling volume of the equalizing container (11) is approximately constant.

11. Metering apparatus according to one of Claims 1 to 10, **characterized in that** the metering device (2) is mounted moveably.

12. Method for operating a metering apparatus (1) with at least one reservoir (3) and with a metering device (2) which is connected by line to the reservoir (3) and dispenses the medium which is to be metered to receiving containers, **characterized in that** a plurality of piston-cylinder units (5) in the form of disposable parts are inserted into the metering device (2), are connected to a driving device (6) and, after a metering cycle which is adaptable to the application, are exchanged for new disposable parts, and **in that** the piston-cylinder units (5) are placed onto valve housings (10) of valve devices (9) which are in the form of disposable parts and, after the metering cycle, are exchanged for new valve devices (9) in the form of disposable parts.

13. Method according to Claim 12, **characterized in that**, for drop return into an ejection cannula (16) of the piston-cylinder unit (5), after the metering operation the piston (8) of said piston-cylinder unit is drawn back for a certain distance in order to relieve the liquid column of pressure, and therefore the drop located at the tip of the ejection cannula (16) is drawn back.

## Revendications

1. Dispositif de dosage comprenant au moins un récipient de prélèvement (3) et un dispositif de dosage (2), qui est en liaison avec le récipient de prélèvement (3) par le biais d'une conduite, et par le biais duquel dispositif de dosage le fluide à doser peut être délivré à des contenants de réception,
le dispositif de dosage (2) présentant plusieurs unités cylindre-piston (5) présentant à chaque fois un piston (8) et un cylindre (15), qui sont en liaison d'écoulement avec un dispositif de soupape (9),
**caractérisé en ce que**
les unités cylindre-piston (5) sont réalisées sous forme de pièces à usage unique en plastique et sont insérées de manière remplaçable dans le dispositif de dosage (2),
**en ce que** chaque dispositif de soupape (9) présente un boîtier de soupape (10) et **en ce que** les unités cylindre-piston (5) sont disposées de manière à pouvoir être montées et démontées sur les boîtiers de soupape (10) de manière hermétique et sans nécessiter d'outils.

2. Dispositif de dosage selon la revendication 1, **caractérisé en ce que** le cylindre respectif (15) de l'unité cylindre-piston (5) est posé sur le boîtier de soupape correspondant (10).

3. Dispositif de dosage selon la revendication 1 ou 2, **caractérisé en ce que** le dispositif de dosage (2) présente un dispositif d'entraînement à moteur (6) qui est connecté à un dispositif d'accouplement (7) déplaçable longitudinalement qui peut être fixé sur le piston (8) de l'unité cylindre-piston (5).

4. Dispositif de dosage selon la revendication 3, **caractérisé en ce que**
le dispositif d'accouplement (7) présente pour chaque piston (8) de l'unité cylindre-piston (5) un raccord rapide (22) qui est de préférence pourvu d'un élément de compensation.

5. Dispositif de dosage selon l'une quelconque des revendications 1 à 4, **caractérisé en ce que** les dispositifs de soupape (9) sont réalisés sous forme de pièces à usage unique qui se composent de préférence de matière plastique.

6. Dispositif de dosage selon l'une quelconque des revendications 1 à 5, **caractérisé en ce que** chaque dispositif de soupape (9) présente dans le boîtier de soupape (10) une soupape d'aspiration et une soupape d'éjection.

7. Dispositif de dosage selon l'une quelconque des revendications 1 à 6, **caractérisé en ce que** les dispositifs de soupape (9) sont disposés sur un rail distributeur (17) qui est en liaison par le biais d'une conduite de liaison avec le récipient de prélèvement (3).

8. Dispositif de dosage selon l'une quelconque des revendications 1 à 7, **caractérisé en ce qu'**entre le récipient de prélèvement (3) et l'unité cylindre-piston (5) est disposé un récipient de compensation (11) pour maintenir une dépression d'aspiration essentiellement constante dans la conduite de liaison.

9. Dispositif de dosage selon la revendication 8, **caractérisé en ce que**
le récipient de compensation (11) est pourvu d'un filtre stérile (12).

10. Dispositif de dosage selon la revendication 8 ou 9, **caractérisé en ce que**
le récipient de compensation (11) est pourvu d'un agencement de capteur pour commander une pompe dans la conduite de liaison allant au récipient de prélèvement (3), de telle sorte que le volume de remplissage du récipient de compensation (11) soit approximativement constant.

11. Dispositif de dosage selon l'une quelconque des revendications 1 à 10, **caractérisé en ce que** le dispositif de dosage (2) est monté de manière déplaçable.

12. Procédé pour faire fonctionner un dispositif de dosage (1) comprenant au moins un récipient de prélèvement (3) et un dispositif de dosage (2), qui est en liaison avec le récipient de prélèvement (3) par le biais d'une conduite et qui délivre le fluide à doser à des contenants de réception,
**caractérisé en ce que**
dans le dispositif de dosage (2) sont insérées plusieurs unités cylindre-piston (5) réalisées sous forme de pièces à usage unique, lesquelles sont connectées à un dispositif d'entraînement (6) et sont remplacées par de nouvelles pièces à usage unique après un cycle de dosage adaptable en fonction des cas, et
**en ce que** les unités cylindre-piston (5) sont posées sur des boîtiers de soupape (10) de dispositifs de soupape (9) réalisés sous forme de pièces à usage unique, qui sont remplacés après le cycle de dosage par de nouveaux dispositifs de soupape (9) réalisés sous forme de pièces à usage unique.

13. Procédé selon la revendication 12, **caractérisé en ce que**
pour la réaspiration de gouttes dans une canule d'éjection (16) de l'unité cylindre-piston (5), son piston (8) est retiré quelque peu après le dosage, pour détendre la pression de la colonne de liquide de telle sorte que la goutte se trouvant au niveau de la pointe de la canule d'éjection (16) soit réaspirée.
